# EUROPEAN PATENT SPECIFICATION

(11) **EP 4 489 298 B1**
(45) Date of publication and mention of the grant of the patent: **13.05.2026**
(21) Application number: 24186441.2
(22) Date of filing: 04.07.2024
(51) Int. Cl.: H02S 40/10, H02S 20/00, B08B 3/02, B08B 5/02, F26B 21/00, H02S 30/10, F24S 40/20, F26B 21/50

(54) **MULTIFUNCTIONAL STRUCTURE FOR PHOTOVOLTAIC PANELS**
MULTIFUNKTIONELLE STRUKTUR FÜR FOTOVOLTAISCHE PANEELE
STRUCTURE MULTIFONCTIONNELLE POUR PANNEAUX PHOTOVOLTAÏQUES

(30) Priority: 06.07.2023 IT 202300014076
(43) Date of publication of application: 08.01.2025
(73) Proprietor: Rego S.r.l. Società Benefit, 50053 Empoli (FI) (IT)
(72) Inventor: CIAPONI, Fabio, 50053 EMPOLI - FIRENZE (IT)
(74) Representative: Nesti, Antonio

(56) References cited:
- CN-A- 110 756 518
- CN-U- 216 225 877
- KR-B1- 101 358 495
- US-B1- 11 404 998

## Description

### Field of the Invention

The invention relates to a multifunctional structure for photovoltaic panels and in particular a structure with a function of both panel support and positioning and of assistance for the cleaning thereof by means of the use of compressed air.

### Technical background

It is known at present, both basic research and industrial efforts are strongly focused on improving the efficiency of energy production through the exploitation of the sun.

In this context, photovoltaic panels or modules represent the main tool for transforming energy from the sun into electrical energy.

However, the productivity of photovoltaic panels does not depend exclusively on endogenous factors such as the features of the materials and technologies used, but also on exogenous factors, for example positioning, geographical area, climatic conditions and, importantly, the cleanliness conditions of the panels which largely determine the overall efficiency of the energy conversion system.

To this end, various cleaning systems have been developed over time, for example cleaning robots, vibration systems and compressed air systems which have the purpose of removing dust from the panels.

Among the known systems, the construction of cleaning robots is one of the most studied and concretely used solutions.

The advantages of this system are given by an optimal cleaning thanks to the mechanical combination of brushes and the use of water.

The negative aspects are still due to the use of water and the presence of complex mechanical movement.

Among the negative aspects, there is also the considerable amount of energy which is absorbed for its operation.

Vibration systems for dust removal have also been studied in combination with antistatic coatings, but despite having the advantage of not using water, they have shown a lower efficiency capacity than both the manual and robotic systems.

Compressed air systems have been studied in two recent works (King, M., D. Li, - M. Dooner, S. Ghosh, J. N. Roy, C. Chakraborty, and J. Wang. 2021. Mathematical Modelling of a System for Solar PV Efficiency Improvement Using Compressed Air for Panel Cleaning and Cooling. Energies 14 (14):4072, and - Li, D., M. King, M. Dooner, S. Guo, and J. Wang. 2021. Study on the cleaning and cooling of solar photovoltaic panels using compressed airflow. Solar energy 221:433-444.

An example is shown by US11316469, which discloses a system including a storage tank containing pressurized air which drives actuators and a panel cleaning device. This document also shows sensors associated with the actuators and cleaning device configured to detect fluids and debris on the panels, to be removed by means of a programmable processor configured to execute stored instructions.

There are basically three advantages considered in the compressed air systems, namely that no water is used, there are no mechanisms with mechanical movement, and they can be activated with a high frequency.

However, it has been found that the absence of a mechanical action in the dust removal generates a significantly lower cleanliness rate with the same frequency and conditions of the cleaning intervention.

Such an inconvenience therefore requires a commitment of hours and equipment which at present makes the use of compressed air for cleaning photovoltaic plants uneconomical, in particular if located in unreachable points such as in the case of building roofs.

A solar panel cleaning system is also known from CN216225877U which comprises a source of compressed air, a main air conveying pipe, an air conveying branch tube and a air-blowing cleaning device used to blow compressed air onto the panel surface and remove dust and dirt in general. Documents US 11, 404 998 B1, CN 110 756 518 A, KR 101 358 495 B1 also relate to a solar panel cleaning system.

### Object of the invention

The present invention is intended to overcome the drawbacks of the already known solutions and propose a multifunctional structure which allows simultaneously effectively installing photovoltaic panels and allowing an optimal cleaning thereof using compressed air, in order to improve the energy productivity thereof and reduce the structural and energy cost of the cleaning system, thus making it acceptable from an economic point of view.

### Summary of the invention

These objects have been achieved by creating a multifunctional structure for supporting one or more photovoltaic panels (P) provided with a sensitive surface exposed to solar radiation above an installation surface (C) as defined in claim 1 in which a compressed air conduction system is provided which exploits the support structures of the photovoltaic panels to perform the double function of connection between the panel and the underlying structure (or ground) during the installation of the panels and that of air conduction during cleaning interventions. The preferred embodiments are set out in the appended set of dependent claims

A first advantage of the invention is that the resource required for cleaning is a fluid with almost unlimited availability at each installation site without the need to make sealing systems such as in the case of pressurised liquids.

A further advantage consists in the absence of moving cleaning components such as robots, rollers, brushes, etc. or movement of the photovoltaic modules or the support structure and consequently in the less or substantially non-existent wear of the structure.

A further advantage is the possibility of planning the frequency and timing of dust removal without the presence of operators, an aspect of particular importance in large plants positioned in agricultural or desert areas where the presence of dust is significant, but also in all those plants accessed by operators with difficulty or with the risk of falling.

For example, the jet frequency of the compressed air and its activation can be of the smart type, i.e., dependent on the boundary conditions of the plant. In fact, it has been found that the factors which determine the deposition of dust are attributable to air currents, while the presence of moisture represents a factor of dust adhesion to the surface of the panel and, at the same time, wind and rain are natural phenomena which tend to mitigate the loss of efficiency of photovoltaic panels thanks to the partial cleaning effect they can have. Furthermore, the analysis of the effects which dust deposition has on the energy productivity of the photovoltaic panel has shown that the most effective cleaning strategy is the one which intervenes in the first phases of deposition, since it is precisely in these phases that the greatest loss of productivity and decrease in efficiency are recorded.

For all these reasons, the invention allows to implement, with appropriate sensors and electronic control, a smart and automatic management of the cleaning so as to be able to obtain a removal of the dust at the initial moment of its deposition, thus avoiding adhesion phenomena whose removal would be difficult to perform without mechanical actions.

A further advantage is that thanks to the invention, the objective of distributing the air for cleaning throughout the plant is achieved without incurring an increase in costs, since the costs for the preparation of the panel fixing system must still be incurred.

### List of drawings

These and other advantages will be better understood by any person skilled in the art from the following disclosure and the accompanying drawings, given as a non-limiting example, in which:
- fig.1 shows a structure according to the invention;
- fig. 2 shows an example embodiment of a profile of the structure of fig. 1;
- fig.2a, 2b respectively show a side and front view of the profile of fig.2 applied to a structure according to the invention;
- fig.3 schematically shows a pneumatic plant of a structure according to the invention.

### Detailed description

With reference to the drawings, a preferred embodiment is disclosed of a multifunctional structure according to the invention for supporting one or more photovoltaic panels P exposed with a surface 7 sensitive to solar radiation above an installation surface C, for example a roof or a ground.

In the illustrated embodiment, the structure comprises a base frame 1 formed, for example, by a tubular or reticular structure provided with a fastening 31 to the installation surface C and which offers an upper surface, typically an inclined surface, for the installation of the panels.

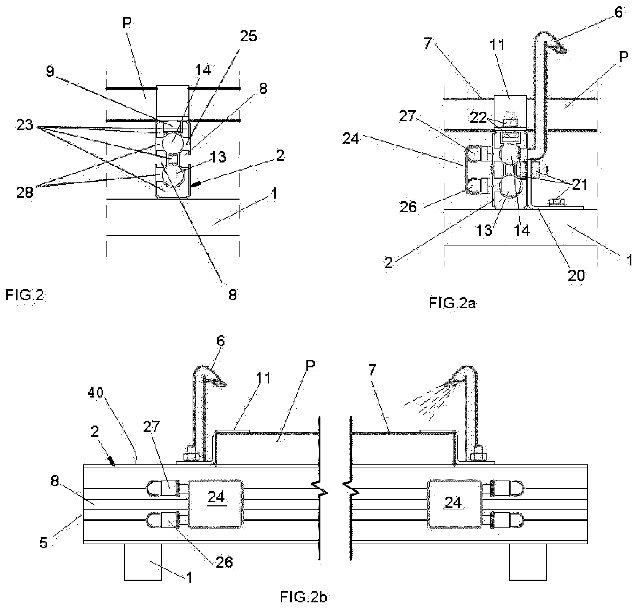

According to the invention, a second load-bearing structure 2 is fixed above the frame 1, sized to support the installation of one or more panels P and formed by tubular profiles better illustrated in figures 2, 2a, 2b where tubular profiles 2 are shown by way of example, comprising lateral grooves 8 and an upper groove 9 for fixing to the frame and to the panels P, respectively, as well as any lightening chambers 23 for the purpose of reducing the overall weight of the structure.

The fixing of the tubular profiles 2 to the panels is obtained by means of clamps 11 superimposed on the panels P and which can be tightened with bolts 22 to the grooves 9, while the fixing to the frame 1 can be obtained by means of shaped brackets 20 joined with bolts 21 to both the frame 1 and to a groove 8 of the profile (fig.2b).

Advantageously, both the clamps 11 and the brackets 20 can be slidably positioned along the grooves 978, to adapt the structure to the use of panels of different type or arrangement and/or to different types of the underlying frame 1, in particular in the case of a pre-existing frame.

The tubular elements 2 are also provided with at least one inlet 5 for a flow of compressed air coming from a pipe 17 connected to a source of compressed air, for example a compressor 18, and intended to feed a distribution of nozzles 6 fixed to the curbs 25 of the profiles 2 and arranged to dispense a flow of compressed air towards the sensitive surface 7 of the panels P.

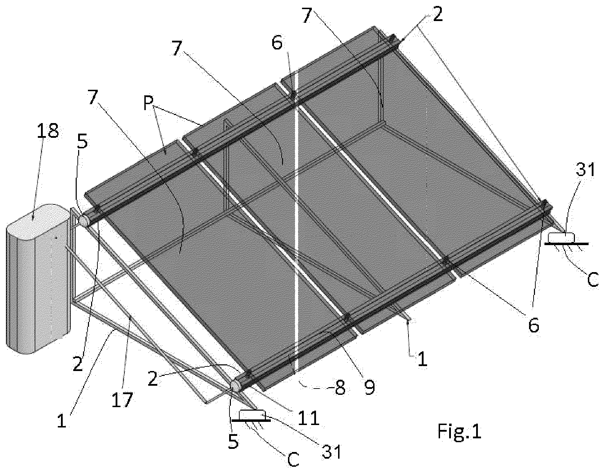

Figure 1 schematically depicts more panels P fixed to the structure 2 and spaced apart to allow the positioning of the nozzles 6 between adjacent panels, however, it is understood that the distribution, shape and orientation of the tubular elements and nozzles may be of different types, as long as they are functional for sending a flow of air onto the surface 7 in order to clean it from dust and debris.

For example, as illustrated in fig.1, a pair of tubular elements 2 can be provided near opposite sides of the panels P and at least one nozzle 6 positioned at each panel.

Figure 2 shows a cross-section of a preferred embodiment of the tubular elements 2, comprising a main internal channel 13 communicating at one end with the compressed air inlet 5.

The main channel 13 also communicates with the dispensing nozzles 6 by means of an internal bypass channel 14 connected to the main channel 13 by means of a distribution of controllable solenoid valves 24 fixed to curbs 28 of the profiles 2 and communicating by means of ducts 26, 27 respectively with the main channel 13 and the bypass channel 14. The valves 24 are connected to a control unit U configured to control the opening thereof and thus control the inflow of air to one or more nozzles.

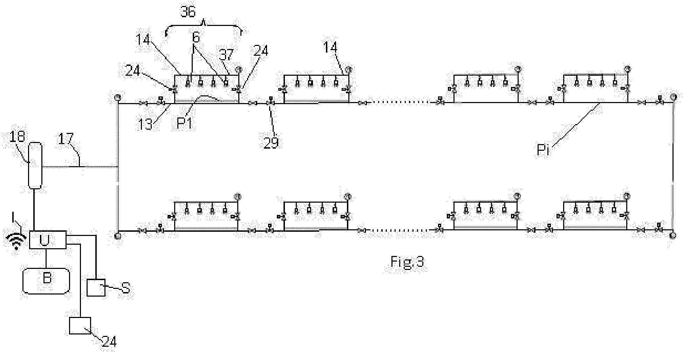

Figure 3 schematically depicts a pneumatic system for a multifunctional structure according to the invention for the installation of a number "i" of panels P, in which the panels are supported by the structure 2 and kept clean thanks to the compressed air dispensed by the nozzles 6.

In this example, the valves 24 are arranged at the ends of a section 37 of the bypass channel 14 to control the arrival of air to groups 36 of nozzles 6 positioned to dispense the air flow towards the same panel P.

Advantageously, moreover, the system of figure 3 envisages that between groups 36 of nozzles intended to clean each panel P there is at least one solenoid valve 29 for sectioning the main channel 13.

By way of example, the system can comprise a control unit U operatively connected as well as to the solenoid valves 24, to a sensor S, to the compressor 18, and to a possible storage B.

Preferably, the sensors S can comprise environmental sensors such as rain and/or wind sensors and efficiency sensors of the panels P for detecting the current efficiency level of the electrical conversion.

In the use of the structure, the profiles 2 are mounted on the frame 1 by means of the brackets 20 and the panels P are positioned thereon, clamped by means of the clamps 11.

Once the mechanical assembly of the structure is complete, the channels 13 of the profiles 2 are connected to the source of compressed air and the control unit U is connected to the compressor 18, to the solenoid valves 24, to any sensors S and to the solenoid valves 29, if present.

The unit U, which can be electrically powered by the same panels P or by a different source of electrical energy, can thus activate the operation of the compressor 18 and open the solenoid valves 24 to start cleaning one or more panels where necessary.

The cleaning logic can depend either on simple timing, or be determined by appropriate algorithms based both on the detections of the sensors S and on one or more factors such as the time, the charge state of the battery, remote data for example of satellite origin, the presence of any precipitation.

To this end, the system can comprise a wireless interface I of the control unit U configured to receive relevant data for activation logic use, and/or activation instructions given remotely.

The present invention has been described according to preferred embodiments but equivalent variants can be conceived without departing from the scope of protection.

## Claims

1. Multifunctional structure for supporting one or more photovoltaic panels (P) provided with a sensitive surface (7) exposed to solar radiation above an installation surface (C), comprising a load-bearing tubular structure (2) provided with fixing means (9, 11) for fixing to one or more panels (P), at least one inlet (5) for a compressed air flow and a distribution of nozzles (6) for dispensing one or more compressed air flows directed towards the sensitive surface (7) of the panel (P),
**characterized in that** said load-bearing tubular structure (2) comprises
at least one tubular element (2) provided with an upper surface (40) for resting the panels (P),
fixing means (9, 11) for fixing said at least one tubular element (2) to an overlying panel (P), said fixing means (9, 11) comprising at least one clamp (11) connectable to the panel by means of clamping elements (22) which are adjustable in position along an upper groove (9) of the profile (2) of the tubular element (2).

2. Structure according to claim 1, wherein said at least one tubular element (2) comprises a first main internal channel (13) communicating with said compressed air inlet (5) and an internal bypass channel (14) communicating with the nozzles (6) and with the first channel (13) by means of at least one controllable solenoid valve (24).

3. Structure according to claim 2, wherein ducts (26, 27) branch off from said at least one solenoid valve (24), respectively communicating with the main channel (13) and with the secondary channel (14).

4. Structure according to claim 3, comprising an assembly (36) of nozzles (6) communicating with a section (37) of the bypass channel (14) and positioned to dispense the air flow towards a same panel (P), said section (37) of the internal bypass channel (14) being connected to the main channel (13) by means of a pair of solenoid valves (24) arranged at its ends.

5. Structure according to one of the preceding claims, provided with first fixing means (8, 20) of said at least one tubular element (2) to an underlying frame (1), the first fixing means comprising at least one connection bracket (20) which can be constrained to the frame and to a side groove (8) of the profile (2) by means of clamping elements (21) which are adjustable in position along the tubular element (2) itself.

6. Structure according to one of the preceding claims, comprising a pair of tubular elements (2) configured to be fixed near opposite sides of said panels (P).

7. Photovoltaic plant comprising a structure according to one of the preceding claims for supporting one or more panels (P) and a pipe (17) for connecting said inlet (5) with a source of compressed air (18).

8. Plant according to claim 7, further comprising a control unit (U) operatively connected to said solenoid valves (24), and configured to control the opening of the solenoid valves (24) to perform the pneumatic cleaning of one or more panels.

9. Plant according to claim 7 or 8, further comprising sensors (S) for detecting parameters associated with the electrical conversion efficiency of the panels (P), wherein said unit (U) is connected to said sensors and is configured to control the opening of the solenoid valves (24) based at least on the detections of the sensors (S) to perform the pneumatic cleaning of one or more panels.

10. Plant according to one of claims 7-9, further comprising a wireless interface (I) of the control unit U configured to receive relevant data for activation logic use, and/or activation instructions given remotely.

## Patentansprüche

1. Multifunktionale Struktur zur Abstützung eines oder mehrerer Photovoltaik-Paneele (P) mit einer lichtempfindlichen, der Sonneneinstrahlung ausgesetzten empfindlichen Oberfläche (7) über einer Montagefläche (C), bestehend aus einer ladungstragenden Rohrstruktur (2) mit Befestigungsmitteln (9, 11) zur Befestigung an einem oder mehreren Paneelen (P), mindestens aus einem Einlass (5) für einen Druckluftstrom und aus einer Düsenverteilung (6) zur Abgabe eines oder mehrerer Druckluftströme, die auf die empfindliche Oberfläche (7) des Paneels (P) gerichtet sind, **dadurch gekennzeichnet, dass** die ladungstragende Rohrstruktur (2) Folgendes umfasst:
mindestens ein rohrförmiges Element (2) mit einer obere Fläche (40) zur Aufnahme der Paneele (P),
Befestigungsmittel (9, 11) zum Befestigen des mindestens einen rohrförmigen Elements (2) an einem darüber liegenden Paneel (P), wobei die Befestigungsmittel (9, 11) mindestens eine Klemme (11) umfassen, die mit dem Paneel mittels Klemmelementen (22) verbunden werden kann, welche entlang einer oberen Nut (9) des Profils (2) des rohrförmigen Elements (2) positionierbar sind.

2. Struktur nach Anspruch 1, wobei das mindestens eine rohrförmige Element (2) einen ersten Hauptinnenkanal (13) umfasst, der mit dem Drucklufteinlass (5) in Verbindung steht, sowie einen inneren Bypasskanal (14), der mit den Düsen (6) und dem ersten Kanal (13) mittels mindestens eines steuerbaren Magnetventils (24) in Verbindung steht.

3. Struktur nach Anspruch 2, wobei von dem mindestens einen Magnetventil (24) Kanäle (26, 27) abzweigen, die jeweils mit dem Hauptkanal (13) und dem Nebenkanal (14) in Verbindung stehen.

4. Struktur nach Anspruch 3, umfassend eine Anordnung (36) von Düsen (6), die mit einem Abschnitt (37) des Bypasskanals (14) in Verbindung stehen und so angeordnet sind, dass sie den Luftstrom auf ein gemeinsames Paneel (P) lenken, wobei dieser Abschnitt (37) des inneren Bypasskanals (14) mittels zweier an seinen Enden angeordneter Magnetventile (24) mit dem Hauptkanal (13) verbunden ist.

5. Struktur nach einem der vorhergehenden Ansprüche, die mit ersten Befestigungsmitteln (8, 20) des mindestens einen rohrförmigen Elements (2) an einem darunterliegenden Rahmen (1) versehen ist, wobei die ersten Befestigungsmittel mindestens einen Verbindungsbügel (20) umfassen, der mittels Klemmelementen (21), die entlang des rohrförmigen Elements (2) selbst positionierbar sind, an dem Rahmen und an einer seitlichen Nut (8) des Profils (2) fixiert werden kann.

6. Struktur nach einem der vorhergehenden Ansprüche, umfassend ein Paar rohrförmiger Elemente (2), die so konfiguriert sind, dass sie nahe gegenüberliegenden Seiten der genannten Paneele (P) befestigt werden können.

7. Photovoltaik-Anlage mit einer Struktur nach einem der vorhergehenden Ansprüche zur Abstützung eines oder mehrerer Paneele (P) und einem Rohr (17) zum Verbinden des Einlasses (5) mit einer Druckluftquelle (18).

8. Anlage nach Anspruch 7, ferner umfassend eine Steuereinheit (U), die mit den Magnetventilen (24) operativ verbunden ist und so konfiguriert ist, dass sie die Öffnung der Magnetventile (24) steuert, um die pneumatische Reinigung eines oder mehrerer Paneele durchzuführen.

9. Anlage nach Anspruch 7 oder 8, ferner umfassend Sensoren (S) zur Erfassung von Parametern, die mit dem elektrischen Wirkungsgrad der Paneele (P) zusammenhängen, wobei die Einheit (U) mit den Sensoren verbunden ist und so konfiguriert ist, dass sie die Öffnung der Magnetventile (24) auf der Grundlage der Messwerte der Sensoren (S) steuert, um die pneumatische Reinigung eines oder mehrerer Paneele durchzuführen.

10. Anlage nach einem der Ansprüche 7-9, ferner umfassend eine drahtlose Schnittstelle (I) der Steuereinheit U, die so konfiguriert ist, dass sie relevante Daten für die Aktivierungslogik und/oder ferngesteuerte Aktivierungsanweisungen empfängt.

## Revendications

1. Structure multifonctionnelle pour supporter un ou plusieurs panneaux photovoltaïques (P) dotés d'une surface sensible (7) exposée au rayonnement solaire au-dessus d'une surface d'installation (C), comprenant une structure tubulaire porteuse (2) d'une charge munie de moyens de fixation (9, 11) pour la fixation à un ou plusieurs panneaux (P), au moins une entrée (5) pour un flux d'air comprimé et une distribution de buses (6) pour distribuer un ou plusieurs flux d'air comprimé dirigés vers la surface sensible (7) du panneau (P), **caractérisée en ce que** ladite structure tubulaire (2) porteuse d'une charge comprend au moins un élément tubulaire (2) muni d'une surface supérieure (40) pour supporter les panneaux (P), ou plusieurs flux d'air comprimé dirigés vers la surface sensible (7) du panneau (P), des moyens de fixation (9, 11) pour fixer ledit au moins un élément tubulaire (2) à un panneau sus-jacent (P), lesdits moyens de fixation (9, 11) comprenant au moins une pince (11) connectable au panneau au moyen d'éléments de serrage (22) qui sont réglables en position le long d'une rainure supérieure (9) du profil (2) de l'élément tubulaire (2).

2. Structure selon la revendication 1, dans laquelle ledit au moins un élément tubulaire (2) comprend un premier canal interne principal (13) communiquant avec ladite entrée (5) d'air comprimé et un canal de dérivation interne (14) communiquant avec les buses (6) et avec le premier canal (13) au moyen d'au moins une électrovanne contrôlable (24).

3. Structure selon la revendication 2, dans laquelle des conduits (26, 27) se ramifient à partir d'au moins une électrovanne (24), communiquant respectivement avec le canal principal (13) et avec le canal secondaire (14).

4. Structure selon la revendication 3, comprenant un ensemble (36) de buses (6) communiquant avec une section (37) du canal de dérivation (14) et positionnées pour distribuer le flux d'air vers un même panneau (P), ladite section (37) du canal de dérivation interne (14) étant reliée au canal principal (13) au moyen d'une paire d'électrovannes (24) disposées à ses extrémités.

5. Structure selon l'une des revendications précédentes, munie de premiers moyens de fixation (8, 20) dudit au moins un élément tubulaire (2) à un cadre sous-jacent (1), les premiers moyens de fixation comprenant au moins un support de connexion (20) qui peut être contraint au cadre et à une rainure latérale (8) du profil (2) au moyen d'éléments de serrage (21) réglables en position le long de l'élément tubulaire (2) lui-même.

6. Structure selon l'une des revendications précédentes, comprenant une paire d'éléments tubulaires (2) configurés pour être fixés près des côtés opposés desdits panneaux (P).

7. Installation photovoltaïque comprenant une structure selon l'une des revendications précédentes pour supporter un ou plusieurs panneaux (P) et un tuyau (17) pour relier ladite entrée (5) à une source d'air comprimé (18).

8. Installation selon la revendication 7, comprenant en outre une unité de commande (U) reliée fonctionnellement auxdites électrovannes (24), et configurée pour commander l'ouverture des électrovannes (24) afin d'effectuer le nettoyage pneumatique d'un ou plusieurs panneaux.

9. Installation selon la revendication 7 ou 8, comprenant en outre des capteurs (S) pour détecter des paramètres associés à l'efficacité de conversion électrique des panneaux (P), dans laquelle ladite unité (U) est connectée auxdits capteurs et est configurée pour commander l'ouverture des électrovannes (24) au moins sur la base des détections des capteurs (S) afin d'effectuer le nettoyage pneumatique d'un ou plusieurs panneaux.

10. Installation selon l'une des revendications 7 à 9, comprenant en outre une interface sans fil (I) de l'unité de commande U configurée pour recevoir des données pertinentes pour l'utilisation d'une logique d'activation et/ou des instructions d'activation données à distance.
